# EUROPÄISCHE PATENTSCHRIFT

(11) **EP 4 457 103 B1**
(45) Veröffentlichungstag und Bekanntmachung des Hinweises auf die Patenterteilung: **10.12.2025**
(21) Anmeldenummer: 22843256.3
(22) Anmeldetag: 21.12.2022
(51) Int. Cl.: B60B 35/00, B61F 3/16

(54) **PORTALACHSE FÜR EIN SCHIENENFAHRZEUG UND VERFAHREN ZUM HERSTELLEN EINER SOLCHEN PORTALACHSE**
PORTAL AXLE FOR A RAIL VEHICLE, AND METHOD FOR PRODUCING SUCH A PORTAL AXLE
ESSIEU PORTIQUE POUR UN VÉHICULE FERROVIAIRE ET PROCÉDÉ PERMETTANT DE PRODUIRE UN TEL ESSIEU PORTIQUE

(30) Priorität: 27.12.2021 DE 102021006368
(43) Veröffentlichungstag der Anmeldung: 06.11.2024
(73) Patentinhaber: Bochumer Verein Verkehrstechnik GmbH, 44793 Bochum (DE)
(72) Erfinder: MURAWA, Franz, 44805 Bochum (DE); HE, Xie, 44793 Bochum (DE)
(74) Vertreter: Cohausz & Florack
(86) Internationale Anmeldenummer: PCT/EP2022/087143
(87) Internationale Veröffentlichungsnummer: WO 2023/126265

(56) Entgegenhaltungen:
- EP-B1- 0 523 472
- EP-B1- 2 229 461
- EP-B1- 3 490 867
- CZ-U1- 20 920
- JP-A- 2012 121 505

## Beschreibung

Die Erfindung betrifft eine Portalachse für ein Schienenfahrzeug, mit einem sich entlang einer Längsachse erstreckenden Achsmittelteil und zwei Achszapfen, von denen jeweils einer auf einem ersten Endabschnitt des Achsmittelteils und ein zweiter auf einem gegenüberliegend zum ersten Endabschnitt ausgebildeten zweiten Endabschnitt des Achsmittelteils sitzt, wobei die Achszapfen nach außen vom Achsmittelteil weg weisend ausgerichtet sind und im Gebrauch eine Drehachse für ein auf dem jeweiligen Achszapfen drehbar gelagertes Schienenrad bilden. Das Achsmittelteil und die Achszapfen bilden somit die Grundelemente der Portalachse und werden daher unabhängig davon, ob die Portalachse in einem Stück erzeugt oder aus einzelnen vorgefertigten Bauteilen zusammengesetzt ist, als "Formkomponenten" der Portalachse bezeichnet.

Dabei kann eine Portalachse, auf die sich die vorliegende Erfindung bezieht, zusätzliche Formkomponenten umfassen. Hierzu zählen Wangen, die zum Abstützen der Achszapfen auf dem Achsmittelteil vorgesehen sind, oder Träger- oder Stützabschnitte und desgleichen, die zum Befestigen oder Anschlagen von Funktionskomponenten, wie Bauteile eines Federungssystems des jeweiligen Schienenfahrzeuges, vorgesehen sein können.

Portalachsen der hier in Rede stehenden Art werden insbesondere als "invertierte Portalachsen" für Niederflurfahrzeuge, wie Straßen- oder Stadtbahnen, eingesetzt.

Bei "invertierten Portalachsen" bildet das Achsmittelteil kein Joch, an dem die Achszapfen im Gebrauch hängend angeordnet sind bzw. das auf den Achszapfen abgestützt ist. Vielmehr sitzen bei invertierten Portalachsen die Achszapfen auf dem Achsmittelteil, so dass das Achsmittelteil einen Balken darstellt, auf dessen Endabschnitten die Achszapfen abgestützt sind. Beispiele für solche Portalachsen sind in der EP 1 258 410 B1 und auf der Homepage der Anmelderin unter der URL https://www.bochumer-verein.de/die-bvv-niederflurradsaetze-mit-losradlagerung/ (Auffindedatum 9. November 2021) dargestellt.

In Folge ihrer besonderen Bauweise kann bei Radsätzen mit invertierten Portalachsen der in Gebrauchsstellung zwischen den Achszapfen oberhalb der Oberseite des Achsmittelteils vorhandene Raum der Höhe eines Aufbaus, insbesondere der Fahrgastkabine, des jeweiligen Schienenfahrzeugs zugeschlagen werden. Dies erlaubt es beispielsweise bei Niederflur-Schienenfahrzeugen, die Fußbodenhöhe des über dem Radsatz befindlichen Wagenkastens des Niederflurfahrzeugs abzusenken und den Fahrgästen neben einer niedrigen Einstiegshöhe ebene Durchgänge durchs Fahrzeug zu bieten.

Eine besondere Herausforderung bei der Konzeption von invertierten Portalachsen für Niederflurfahrzeuge besteht darin, dass die Portalachsen einerseits im Gebrauch hohen Belastungen ausgesetzt sind, dass sie andererseits aber ein möglichst geringes Gewicht aufweisen sollen, um einen minimierten Bedarf an Antriebsenergie und ein optimiertes Fahrverhalten des jeweils mit ihnen ausgestatteten Schienenfahrzeugs zu erzielen.

Das Dokument EP 3 490 867 B1 beschreibt eine Portalachse eines NiederflurSchienenfahrzeugs. Das Dokument EP 2 229 461 B1 beschreibt eine Achse für Schienenfahrzeuge, die aus einem nahtlosen Stahlrohr geschmiedet ist. Das Dokument CZ 20 920 U1 beschreibt eine Achse für ein Schienenfahrzeug. Das Dokument JP 2012 121505 A beschreibt ebenfalls eine Achse für ein Schienenfahrzeug.

Ausgehend von dem voranstehend erläuterten Stand der Technik hat sich vor diesem Hintergrund die Aufgabe ergeben, eine Portalachse der eingangs erläuterten Art anzugeben, die bei minimiertem Gewicht optimierte Gebrauchseigenschaften besitzt.

Ebenso sollte ein Verfahren zur Herstellung einer solchen Portalachse genannt werden.

Eine diese Aufgabe erfindungsgemäß lösende Portalachse weist mindestens die in Anspruch 1 angegebenen Merkmale auf.

Ein die voranstehend genannte Aufgabe erfindungsgemäß lösendes Verfahren ist in Anspruch 11 genannt.

Vorteilhafte Ausgestaltungen der Erfindung sind in den abhängigen Ansprüchen angegeben und werden wie der allgemeine Erfindungsgedanke nachfolgend im Einzelnen erläutert.

In Übereinstimmung mit dem eingangs erläuterten Stand der Technik weist eine erfindungsgemäße Portalachse für ein Schienenfahrzeug somit folgende Formkomponenten auf:
- einen sich entlang einer Längsachse erstreckenden Achsmittelteil,
   und
- zwei Achszapfen, von denen einer an einem ersten Endabschnitt des Achsmittelteils und ein zweiter an einem gegenüberliegend zum ersten Endabschnitt ausgebildeten zweiten Endabschnitt des Achsmittelteils sitzt, wobei die Achszapfen nach außen vom Achsmittelteil weg weisend ausgerichtet sind und im Gebrauch eine Drehachse für ein auf dem jeweiligen Achszapfen drehbar gelagertes Schienenrad bilden.

Erfindungsgemäß ist nun in mindestens eine der Formkomponenten, d.h. mindestens in den Achsmittelteil und/oder mindestens in einen der Achszapfen, eine sich in Längsrichtung der Portalachse erstreckende Längsöffnung eingeformt.

Der erfindungsgemäßen Gestaltung einer Portalachse entsprechend umfasst ein erfindungsgemäßes Verfahren zum Herstellen einer gemäß einem der voranstehenden Ansprüche ausgebildeten Portalachse, folgende Arbeitsschritte:
a) Bereitstellen eines Portalachsen-Rohlings, der die Formkomponenten "Achsmittelteil" und "Achszapfen" aufweist;
b) Einbringen einer Längsöffnung in mindestens eine der Formkomponenten;
c) optionales Randschichtbehandeln der Portalachse im Bereich einer Innenfläche der Längsöffnung und / oder im Bereich einer Außenfläche der Portalachse;
d) optionales Oxidieren mindestens der Innenfläche der Längsöffnung und / oder im Bereich einer Außenfläche der Portalachse.

Durch die bei einer erfindungsgemäßen Portalachse in dem Achsmittelteil und / oder die Achszapfen eingeformte Längsöffnung ist zum einen das Gewicht der Portalachse reduziert.

Zum anderen lässt sich die erfindungsgemäß vorgesehene Längsöffnung für eine Inspektion der Portalachse nutzen. So erlaubt es die jeweilige Längsöffnung beispielsweise für eine Prüfung auf von der Bauteiloberfläche ausgehenden Anrissen und vergleichbaren Beschädigungen ein Messgerät in das Innere der jeweiligen Formkomponente "Achszapfen" oder "Achsmittelteil" zu führen und so eine gezielte Untersuchung durchzuführen, ohne dass dazu die an der Portalachse gelagerten Schienenräder entfernt oder sonstige aufwändige Demontage- und Montagearbeiten vorgenommen werden müssen.

Die erfindungsgemäß vorgesehene Längsöffnung lässt sich dabei in der jeweiligen Formkomponente der Portalachse ohne Weiteres so anordnen, dass es zu keiner Schwächung der Stabilität der betreffenden Formkomponente im Einzelnen oder der Portalachse im Ganzen kommt. Vielmehr lassen sich die Längsöffnungen so platzieren, dass das Widerstandsmoment von Achsmittelteil und Achszapfen durch entsprechende Gestaltung der Außenkonturen erhöht wird.

Mit Blick auf die Gewichtseinsparung und die Möglichkeit einer einfachen Inspektion vom Inneren der jeweiligen Formkomponente her erweist es sich als besonders günstig, wenn in jede der Formkomponenten "Achszapfen" und "Achsmittelteil" einer erfindungsgemäßen Portalachse jeweils mindestens eine Längsöffnung eingeformt ist.

Die Gewichtsersparnis und Zugänglichkeit für Inspektionszwecke kann dabei dadurch optimiert werden, dass die jeweilige Längsöffnung als Durchgangsöffnung ausgebildet ist, die durch die jeweilige Formkomponente hindurchführt.

Hinsichtlich der Prüfbarkeit einer erfindungsgemäßen Portalachse besteht der Vorteil der erfindungsgemäß in der Portalachse vorgesehenen Längsöffnungen darin, dass das Volumen der im Betriebseinsatz auf Biegung beanspruchten Portalachse im eingebauten Zustand mit hoher Genauigkeit auf entstandene Anrisse quer zur Beanspruchungsrichtung geprüft werden kann. Hierzu kommen im Regelfall Ultraschallprüfköpfe mit einem Einschallwinkel von 40° bis 75° zum Einsatz. Diese können, wenn sie in axialer Richtung durch die Längsöffnungen bewegt werden, von den äußeren Flächen der Achse möglicherweise ausgehende Rissbildungen auch im zusammengebauten Zustand sicher detektieren. Bei herkömmlichen Niederflur-Radsätzen wäre dazu eine aufwändige Demontage der Schienenräder und ihrer Losradlagerung notwendig, um durch eine herkömmliche Oberflächenrissprüfung beispielsweise die Radienübergänge vom Achszapfen zur zugeordneten Wange der Portalachse zu prüfen, die aufgrund der Kerbwirkung besonders rissgefährdet ist.

Im Fall, dass die Achszapfen jeweils eine als Durchgangsöffnung ausgebildete Längsöffnung aufweisen, kann eine Maximierung der Gewichtseinsparung dadurch erzielt werden, dass die Längsöffnung einen von ihrer dem Achsmittelteil zugeordneten Mündung ausgehenden, sich in Längsrichtung der Längsöffnung erstreckenden ersten Abschnitt und einen bis zur freien Stirnseite des Achszapfens reichenden zweiten Abschnitt aufweist, dessen Durchmesser kleiner ist als der Durchmesser des ersten Abschnitts. Eine solche gestufte Ausführung der Längsöffnung kann auch zur Zuverlässigkeit, mit der sich eine Überprüfung der Achszapfen auf Risse mittels eines in die Längsöffnung eingeführten Ultraschallmessgeräts durchführen lässt, beitragen, indem der Abschnitt größeren Durchmessers in einen Bereich verlagert wird, in dem der Achszapfen oder die ihn optional tragende Wange ein größeres Volumen aufweist. Durch den größeren Durchmesser des in diesem Bereich vorgesehenen Abschnitts der Längsöffnung kann auch in einem großvolumigen Bereich der Wange oder des Achszapfens das zur Detektion von Rissen verwendete Messgerät näher an die für die Rissbildung möglicherweise anfällige Zone gebracht werden.

Die im Achsmittelteil erzielte Gewichtsersparnis lässt sich dadurch maximieren, dass mindestens zwei Längsöffnungen in das Achsmittelteil eingeformt sind, wobei diese sich vorzugsweise parallel zueinander und achsparallel zur Längsachse des Achsmittelteils erstrecken. Auch bei dieser Ausgestaltung sind die Längsöffnungen mit Blick auf die Maximierung der Gewichtseinsparung und Optimierung der Zugänglichkeit vorteilhafterweise als Durchgangsöffnungen ausgeführt, welche von der dem einen Achszapfen zugeordneten Seite des Achsmittelteils zur dem anderen Achszapfen zugeordneten Seite des Achsmittelteils führen. Dabei können bei zwei oder mehr Längsöffnungen des Achsmittelteils deren Durchmesser unterschiedlich sein, wenn dies aus statischen Gründen oder aus Platzgründen angezeigt ist. So kann beispielsweise eine bezogen auf einen quer zur Längsachse des Achsmittelteils ausgerichteten Querschnitt mittig angeordnete Längsöffnung mit größerem Durchmesser mit ein oder zwei jeweils seitlich von ihr angeordneten Längsöffnungen mit kleinerem Durchmesser kombiniert werden. Vorzugsweise ist die Anzahl der in den Achsmittelteil eingeformten Längsöffnungen auf höchstens drei beschränkt. Dies gilt insbesondere dann, wenn die Längsöffnungen als Durchgangsbohrung ausgeführt werden.

Eine erfindungsgemäße Portalachse ist insbesondere dazu vorgesehen, als "invertierte Portalachse" für einen Niederflur-Radsatz eingesetzt zu werden. Durch den Einsatz einer invertierten Portalachse wird bei solchen Radsätzen sichergestellt, dass beide Räder des jeweiligen Radsatzes auf derselben Mittelachse laufen und dadurch Spur- und Sturzabweichungen vermieden werden, die bei Verwendung von Einzelradaufhängungen das Spurführungsverhalten des Schienenfahrzeugs im Gleis negativ beeinflussen können.

Im Fall, dass eine erfindungsgemäße Portalachse als "invertierte Portalachse" für Niederflur-Radsätze eingesetzt wird, weist das Achsmittelteil eine im Gebrauch einem Aufbau des Schienenfahrzeugs zugeordnete Oberseite auf, auf der die Achszapfen sitzen. Die Achszapfen können dabei von Wangen getragen sein, die auf dem dem jeweiligen Achszapfen zugeordneten Endabschnitt des Achsmittelteils stehen und von denen die Achszapfen seitlich nach außen vom Achsmittelteil abgewandt vorstehen. Die die nach außen von ihnen abstehenden Achszapfen tragenden Wangen erlauben es, das Achsmittelteil bezogen auf die durch die Achszapfen definierte Drehachse tiefer zu legen, so dass ein maximierter Raum für die Positionierung des Fahrgestells oder des Aufbaus des Schienenfahrzeugs oberhalb des Achsmittelteils der Portalachse zur Verfügung steht. Gleichzeitig können die Wangen zum Beispiel bei innengelagerten Radsätzen zur Abstützung der Primärfederung genutzt werden, über die der mit der betreffenden Portalachse ausgestattete Radsatz am Fahrwerk abgestützt ist.

Grundsätzlich ist es denkbar, eine Portalachse der erfindungsgemäßen Art aus einzeln vorgefertigten Formkomponenten zusammenzusetzen.

Mit Blick darauf, dass auch eine erfindungsgemäße Portalachse alle im Betrieb auftretenden Beanspruchungen zwischen Gleis und Fahrzeug während der gesamten Einsatzdauer des Schienenfahrzeugs sicher übertragen muss, hat es sich aber als zweckmäßig erwiesen, wenn die erfindungsgemäße Portalachse mit ihren Formkomponenten in einem Stück aus einem Stahlwerkstoff hergestellt ist. Geeignet zu diesem Zweck ist ein schmiede- und/oder gießtechnisches Formen des Rohlings aus einem geeigneten Stahlwerkstoff.

Aufgrund der durch Schmieden erzielbaren mechanischen Eigenschaften wird das Achsmittelteil mit den optional an ihm angeformten Wangen der Portalachse bevorzugt in einem Stück geschmiedet. Dabei können die Achszapfen in einem Stück an das Achsmittelteil oder, insbesondere, an die optional vorhandenen Wangen in einem Stück angeschmiedet werden. Alternativ ist es jedoch auch möglich, die Achszapfen in entsprechend vorgesehene Öffnungen der optional vorhandenen Wangen oder des Achsmittelteils einzupressen, einzuschrumpfen oder klebzuschrumpfen. Als Stahlwerkstoff für die schmiedetechnische Erzeugung einer erfindungsgemäßen Portalachse kommen insbesondere die in DIN EN ISO 683 genannten Vergütungsstähle in Frage. Vorzugsweise werden die Stahlsorten 30CrNiMo8, 34CrNiMo6, 42CrMo4, 25CrMo4 oder C45 eingesetzt.

Nach der Schmiedeformgebung kann der erhaltene Portalachsen-Rohling einer Wärmebehandlung unterzogen werden, mit der der Portalachse in bekannter Weise die durch Normen oder sonstige Vorschriften jeweils geforderten mechanischen Eigenschaften verliehen werden. Zu der Wärmebehandlung gehört typischerweise auch ein Spannungsarmglühen, mit dem das Auftreten von Verzug verhindert wird, zu dem es andernfalls bei nachgeschalteten Bearbeitungsprozessen durch freiwerdende Eigenspannungen kommen könnte. Solche Wärmebehandlung, insbesondere auch ein Spannungsarmglühen, kann in ebenso bekannter Weise als Zwischenschritt oder zusätzlicher Arbeitsschritt zwischen einzelnen Teilschritten der nach der schmiedetechnischen Erzeugung durchgeführten mechanischen Bearbeitung der Portalachse erfolgen, sofern sich hierzu der Bedarf ergibt.

Die Längsöffnungen können in jeder aus dem Stand der Technik bekannten Weise in die Achszapfen und/oder den Achsmittelteil eingeformt werden. Insbesondere eignen sich dafür bekannte Bohr- oder vergleichbare spanabhebende Bearbeitungsverfahren.

Um durch korrosive Angriffe ausgelöste Beschädigungen der Portalachse im Bereich ihrer jeweiligen erfindungsgemäß vorgesehenen Längsöffnung zu vermeiden und um eine optimale Ankopplung des Messgeräts an den jeweils zu untersuchenden Bereich bei der Rissprüfung zu gewährleisten, kann die Längsöffnung mindestens an ihrer Innenfläche korrosionsschutzbehandelt sein.

Grundsätzlich wäre es denkbar, zu diesem Zweck ein konventionelles Korrosionsschutzmittel, wie eine Farbbeschichtung, auf die korrosionsgefährdete Fläche aufzutragen. Allerdings ist die Beschichtung von Längsöffnungen aufwändig und die Qualität des Arbeitsergebnisses nur mit hohem Aufwand prüfbar. Hinzu kommt, dass eine solche zusätzliche Beschichtung bei jeder Rissüberprüfung entfernt werden müsste, wenn diese in bekannter Weise per Ultraschall durchgeführt werden soll.

Gemäß einer für die Praxis besonders relevanten Ausgestaltung schlägt die Erfindung daher vor, die erfindungsgemäß vorgesehene Längsöffnung nach Durchführung der mechanischen Bearbeitung einem chemisch/thermischen Wärmebehandlungsprozess zu unterziehen, durch den neben einer signifikanten Erhöhung der Bauteilfestigkeit auch eine hohe Widerstandskraft gegen Korrosionsangriff erreicht wird.

Die Randschichtbehandlung wird dabei bevorzugt als chemisch/thermische Randschichtbehandlung durchgeführt, bei der in bekannter Weise eine Aufhärtung der Randschicht durch mittels Wärmezufuhr eingeleiteter und unterstützter Eindiffusion beispielsweise von N- und / oder C-Atomen in die betreffende Randschicht bewirkt wird. Die hierzu zur Verfügung stehenden Verfahren sind aus dem Stand der Technik an sich bekannt (siehe beispielsweise Merkblatt "MB447 "Wärmebehandlung von Stahl - Nitrieren und Nitrocarburieren", Ausgabe 2005, ISSN 0175-2006, herausgegeben vom Stahl-Informations-Zentrum, Düsseldorf, Deutschland) und im Zusammenhang mit dem hier in Rede stehenden Bereich der Technik beispielsweise in der EP 1 769 940 B1 beschrieben, die eine randschichtgehärtete Laufradwelle für Schienenfahrzeuge betrifft. Vorzugsweise wird die Randschichtbehandlung als Gas-, Bad- oder Plasmanitrieren durchgeführt.

Hier hat es sich herausgestellt, dass der Korrosionsschutz besonders effektiv durch eine thermisch / chemische Randschichtbehandlung erzielt werden kann, in deren Folge die erfindungsgemäße Portalachse mindestens im Bereich der Innenfläche der jeweiligen Längsöffnung in einer an die jeweilige Innenfläche der Längsöffnung grenzenden Randschicht eine Härte aufweist, die gegenüber der Härte erhöht ist, die die Portalachse in einem außerhalb der Randschicht vorhandenen Kernbereich aufweist.

Die gemäß Arbeitsschritt c) des erfindungsgemäßen Verfahrens optional durchgeführte Randschichtbehandlung beschränkt sich gemäß einer ersten Variante des erfindungsgemäßen Verfahrens nur auf die jeweilige Längsöffnung.

Alternativ kann die im Arbeitsschritt c) durchgeführte Randschichtbehandlung jeweils auch eine Außenfläche der Portalachse erfassen, die im Gebrauch besonderen korrosiven oder mechanischen Belastungen ausgesetzt ist. Die Randschichtbehandlung kann dabei auf einen bestimmten Flächenabschnitt der Portalachse begrenzt sein, vorzugsweise aber so ausgeführt werden, dass die Portalachse an ihrer gesamten Außenfläche randschichtbehandelt wird.

Ein besonderer Vorteil der erfindungsgemäß optional vorgesehenen Randschichtbehandlung wird erreicht, wenn nach dem Arbeitsschritt b) des erfindungsgemäßen Verfahrens im Arbeitsschritt c) nicht nur die Längsöffnungen der Portalachse in dieser Weise randschichtbehandelt werden, sondern die gesamte Portalachse. Durch eine die ganze Portalachse erfassende Randschichtbehandlung lässt sich die Schwingfestigkeit der Portalachse speziell in den stärker gekerbten Bereichen, wie beispielsweise im Bereich des Übergangs vom Achsmittelteil zu den Wangen oder, im Fall eines angeschmiedeten Achszapfens, im Bereich des Übergangs vom Achszapfen zur ihn tragenden Wange um 10 bis 40 % anheben. Die durch die erfindungsgemäß vorgesehene Randschichtbehandlung erzielbare Festigkeitssteigerung wirkt sich dabei insbesondere bei solchen Portalachsen günstig aus, die aufgrund des engen zur Verfügung stehenden Bauraums kleine Übergangsradien aufweisen und eine damit einhergehende hohe Anfälligkeit für Rissbildung in Folge von Kerbwirkung mitbringen. Speziell im Bereich der Lagersitze der Achszapfen lassen sich darüber hinaus durch die Kombination der Randschichtbehandlung der Achszapfen und einer nachgeschalteten Beschichtung der Lagersitze mit einer Molybdän-Spritzschicht eine Dauerfestigkeitssteigerung bis zu ca. 60 % erzielen. Bei Portalachsen mit gefügten Achszapfen werden neben der Portalachse zweckmäßig auch die Achszapfen, welche an der Oberfläche aufgrund der Lager- und Dichtungssitze spannungssteigernde Mulden und Absätze aufweisen, einer entsprechenden Randschichtbehandlung unterzogen.

Durch eine die Portalachse im Ganzen erfassende Randschichtbehandlung der voranstehend erläuterten Art lässt sich eine gegenüber Portalachsen ohne Randschichtbehandlung so stark erhöhte Wechselfestigkeit erzielen, dass eine erfindungsgemäße Portalachse deutlich geringere Querschnitte bei gleicher Belastungsfähigkeit aufweisen kann. Auch dies trägt effektiv zur Verminderung des für die Portalachse selbst benötigten Bauraums im Bereich zwischen den Rädern bei. Der dadurch für die Gestaltung des Fahrgestells oder des Aufbaus des Schienenfahrzeugs gewonnene Raum kann bei Niederflurfahrzeugen, die als Straßen- oder Stadtbahnen eingesetzt werden, für verbreiterte Durchgänge im Wagenkasten zur Erhöhung der Kundenzufriedenheit genutzt werden.

Gleichzeitig wird im Fall, dass eine in der voranstehend beschriebenen Weise durchgeführte Randschichtbehandlung auch die Außenflächen der Portalachse erfasst, wie es bei einer die Portalachse im Ganzen erfassenden Randschichtbehandlung der Fall ist, auch eine hohe Korrosionsbeständigkeit im Bereich dieser Außenflächen erreicht. Praktische Erfahrungen zeigen hier, dass die so erreichbare Korrosionsbeständigkeit ausreicht, auf zusätzliche Korrosionsschutzbeschichtungen der Portalachse zu verzichten. Gleichzeitig ist die durch die Randschichtbehandlung erzielte Härte im Bereich der Randschicht und damit einhergehend die Widerstandsfähigkeit an den freien Oberflächen der Portalachse so hoch, dass die Portalachse ausreichend gegen äußere mechanische Angriffe, wie Steinschlag infolge Schotterflug, geschützt ist. Bei konventionellen, nicht randschichtbehandelten Portalachsen verursachen durch derartige Angriffe verursachte Beschädigungen stark spannungserhöhende Kerben, die die Entstehung von Rissen begünstigen, wenn sie nicht in kurzen Zeitabständen regelmäßig beseitigt werden. Durch die erfindungsgemäß optional vorgeschlagene Randschichtbehandlung lassen sich die Inspektionsintervalle deutlich verlängern, wodurch eine erhebliche Kosteneinsparung erzielt wird.

Zusätzlich kann zur Optimierung des Korrosionsschutzes im Bereich der erfindungsgemäß vorgesehenen Längsöffnung beitragen, wenn mindestens die Innenfläche der Längsöffnung mit einer Oxidschicht versehen ist. Genauso kann die Korrosionsbeständigkeit auch im Bereich mindestens einer Außenfläche der Portalachse durch eine gezielte Ausbildung einer Oxidschicht unterstützt werden. Die jeweilige Oxidschicht kann beispielsweise durch eine gezielte Oxidierung der Verbindungsschicht erzeugt werden, die während der Randschichtbehandlung der Formkomponenten an der Bauteiloberfläche entstanden ist. Dazu hat sich bewährt, die Verbindungsschicht nach der Randschichtbehandlung der Formkomponenten unter Zugabe von Sauerstoff bei Temperaturen zwischen 350 °C und 570 °C zu oxidieren. Dabei reagieren die freien Eisenmoleküle sowie Eisennitride mit dem eingeleiteten Sauerstoff zu stabilem Eisenoxid, das sich als dünne Oxidschicht auf der Oberfläche des Bauteils ablagert und bei der vorhandene Poren in der Verbindungsschicht mit Oxid gefüllt werden. Diese Schicht ist chemisch äußerst widerstandsfähig und verleiht den Formkomponenten eine besonders hohe Korrosionsbeständigkeit. Radsätze, die mit erfindungsgemäß gestalteten Portalachsen ausgestattet werden, weisen ein gegenüber Radsätzen mit herkömmlichen Portalachsen vermindertes Gewicht auf. Niedrige Radsatzgewichte bedeuten niedrige ungefederte Massen und somit weniger Erschütterungen, wenn beispielsweise eine mit einem solchen Radsatz bestückte Straßenbahn durch ein Wohnviertel fährt. Gleichzeitig wird durch das verminderte Gewicht der Verbrauch an Antriebsenergie reduziert sowie der Verschleiß an Fahrzeug und Fahrweg minimiert.

Eine unter Verwendung einer erfindungsgemäßen, im Gebrauch insbesondere in invertierter Anordnung eingesetzten Portalachse gebildeter Radsatz für den Einsatz bei Schienenfahrzeugen, bei denen die Anbindung der Portalachse an das Fahrwerk innen, d.h. zwischen den Rädern, erfolgt, umfasst demnach eine erfindungsgemäß gestaltete invertierte Portalachse und zwei Schienenräder, welche typischerweise mittels Kegelrollenlagereinheiten auf den beiden Achszapfen der Portalachse gelagert sind.

Im Fall von Laufradsätzen mit gebremsten Schienenrädern können an der erfindungsgemäßen Portalachse zusätzlich Bremssattelnaben vorgesehen sein, welche die Lager gegen axiales Verschieben sichern und an denen jeweils ein Bremssattel von für das Abbremsen der Schienenräder befestigten Bremseinrichtungen montiert sind. An den Schienenrädern sind dabei Bremsscheiben befestigt, auf die die Bremseinrichtung bei einem Bremsvorgang wirkt.

Im Fall von bei Treibradsätzen, also Radsätzen mit angetriebenen Schienenrädern, sind statt der Bremsscheiben und den Bremssattelnaben Antriebskupplungen vorgesehen, über die das jeweilige Schienenrad an den Antrieb des Schienenfahrzeugs angekoppelt ist. Die Lagerfixierung des jeweils angetriebenen Schienenrads kann ähnlich wie bei den Bremssattelnaben entweder über einen Längs- oder Querpressverband mit einer Nabe oder durch einen Lagersicherungsdeckel erfolgen, welcher mit dem Achszapfen verschraubt wird. Diese axiale Fixierung kann sowohl mittels einer Zentralverschraubung als auch einer Direktverschraubung erfolgen. Der Vorteil bei der Beibehaltung des Bremssattelsitzes am Achszapfen zur Lagerfixierung liegt darin, dass die Portalachsen für die Treib- und Laufradsätze eines Fahrzeugs gleich ausgeführt werden können, der Nachteil, dass die Bremssattelnabensitze zusätzliche Freiräume benötigen und bei Verwendung der Verschraubungslösung mehr Platz innerhalb des Lichtraumprofils des Fahrzeugs für die Antriebe verbleibt.

Darüber hinaus ist es denkbar, zur Vereinheitlichung insbesondere bei ungebremsten Laufradsätzen die Lagerfixierung mittels entsprechend gestalteter Lagersicherungsdeckel wie bei den Treibradsätzen vorzunehmen. Bei gebremsten Laufradsätzen könnten die Bremssättel auch am Fahrwerksrahmen montiert werden. Dies hätte jedoch den Nachteil, dass die Primärfederung zwischen Fahrwerk und Niederflur-Radsatz Einfluss auf die Kontaktfläche Bremsbelag/Reibring hätte.

Alternativ könnten auch die Lagersicherungsdeckel so ausgeführt werden, dass sie zusätzlich die Bremssättel aufnehmen können. In diesem Fall sind die Lagersicherungsdeckel so mit den Achszapfen zu verbinden, dass die aufgrund der Bremskräfte auftretenden hohen Drehmomente verdrehsicher übertragen werden. Diese Verdrehsicherheit kann sowohl über eine Stirn- als auch Längsverzahnung zwischen den Achszapfen und Lagersicherungsdeckeln, eingerichtet für die Aufnahme von Bremssätteln, erreicht werden, als auch in Abhängigkeit von den zu übertragenden Drehmomenten durch Lösungen mit Passstiften oder Schwerspannhülsen.

Brems- und Antriebseinrichtungen der hier erwähnten Art sowie deren Einzelkomponenten, Funktionsweise und Montage sind dem Fachmann aus dem Stand der Technik an sich bekannt. Dabei sind nicht notwendig beide an einer erfindungsgemäßen Portalachse gelagerten Schienenräder gebremst oder angetrieben. Vielmehr können bei ungebremsten Laufradsätzen die Bremsscheiben und Einrichtungen zur Aufnahme von Bremssätteln fehlen. Bei einseitig gebremsten Laufradsätzen kann nur für ein Schienenrad eine Bremssattelnabe und optional eine Nabe zur axialen Lagerfixierung vorgesehen sein. Genauso ist es möglich, einen einseitig angetriebenen Treibradsatz nur eines der an der erfindungsgemäßen Portalachse gelagerten Schienenräder über eine geeignete Kupplungseinrichtung mit dem Antrieb des Schienenfahrzeugs zu verkoppeln, wogegen das andere an der Portalachse gelagerte Schienenrad im Gebrauch ungebremst und unangetrieben lose mitläuft. Alternativ kann bei einem einseitig angetriebenen Treibradsatz das eine an der Portalachse gelagerte Schienenrad angetrieben und für das andere Schienenrad eine Bremsscheibe und Bremssattelnabe vorgesehen sein, um es im Gebrauch mittels einer geeigneten Bremseinrichtung abbremsen zu können.

Bei Niederflur-Radsätzen, welche aufgrund der Spurweite oder des Fahrzeugkonzepts eine Außenlagerung aufweisen, beschränkt sich die Ausführung auf Laufradsätze mit und ohne Bremsscheiben. In diesen Fällen wird der Achszapfen über den Sitz zur Aufnahme der Bremssattelnabe bzw. bei ungebremsten Losrädern optional der Nabe zur Axialfixierung der Lagerung ohne Aufnahmeeinrichtung für Bremssattelnaben nach außen verlängert, um einen zusätzlichen Sitz zur Aufnahme der Achslagerung zu ermöglichen.

Die Schienenräder von Radsätzen, die mit erfindungsgemäßen Portalachsen ausgestattet sind, können als gummigefederte Räder, wie beispielsweise in der DE 33 28 321 C2 beschrieben, oder, vorzugsweise, als Hybridräder ausgeführt sein, wie in der WO 2018/046745 A1 dargestellt.

Nachfolgend wird die Erfindung anhand einer ein Ausführungsbeispiel darstellenden Zeichnung näher erläutert. Es zeigen jeweils schematisch:
- Fig. 1: eine Portalachse für einen Radsatz eines Niederflurschienenfahrzeugs;
- Fig. 2: einen Ausschnitt der Portalachse in einem Schnitt entlang der in Fig. 1 eingezeichneten Längsachse L-L der Portalachse;
- Fig. 3: einen Ausschnitt einer alternativen Ausgestaltung der Portalachse in einem der Fig. 2 entsprechenden Schnittdarstellung;
- Fig. 4: die Portalachse in einer frontalen Ansicht;
- Fig. 5: die Portalachse in einem Längsschnitt entlang der in Fig. 4 eingezeichneten Schnittlinie A-A.

Die Portalachse 1 ist in einem Stück aus einem hierzu geeigneten, gemäß DIN EN ISO 683 zusammengesetzten Vergütungsstahl geschmiedet. Dabei weist die Portalachse 1 einen Achsmittelteil 2 auf, der die Grundform eines flachen Quaders mit einer sich längs einer Längsachse L-L erstreckenden Länge L aufweist, die größer ist als die Breite B des Achsmittelteils 2.

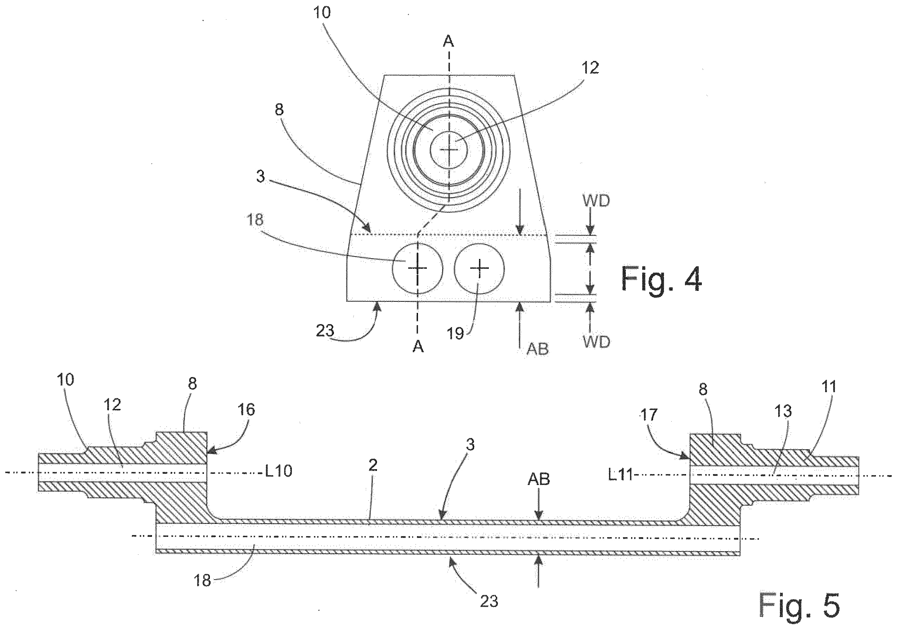

Das Achsmittelteil 2 hat eine Oberseite 3, die im Gebrauch einem hier nicht gezeigten Fahrgestell eines hier ebenfalls nicht gezeigten Niederflurschienenfahrzeugs zugeordnet ist. In den an die Schmalseiten 4,5 des Achsmittelteils 2 jeweils angrenzenden Endabschnitten 6,7 des Achsmittelteils 2 steht jeweils eine Wange 8,9, die in einem Stück mit dem Achsmittelteil 2 geformt ist. In der Längsseitenansicht (Fig. 5) weist die Portalachse somit die Grundform eines "U" auf, dessen Schenkel durch die Wangen 8,9 und dessen Basis durch den Achsmittelteil 2 gebildet sind.

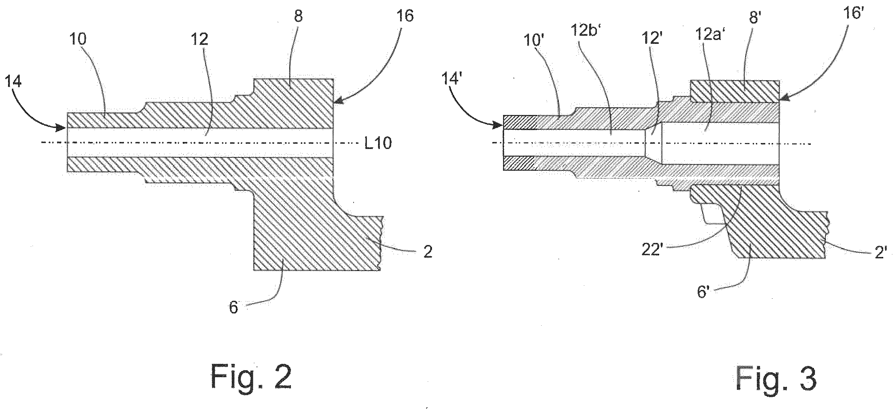

In einer ersten Ausgestaltung, deren Längsschnitt in Fig. 2 und 5 dargestellt ist, ist an jede der Wangen 8,9 ein nach außen von dem Achsmittelteil 2 weg gerichteter Achszapfen 10,11 einstückig angeschmiedet. Die Längsachsen L10,L11 der Achszapfen 10,11 sind koaxial zueinander und parallel zur zentralen Längsachse L-L des Achsmittelteils 2 ausgerichtet.

Die Achszapfen 10,11, die Wangen 8,9 und das Achsmittelteil 2 bilden Formkomponenten, aus denen gemeinsam die Portalachse 1 geformt ist.

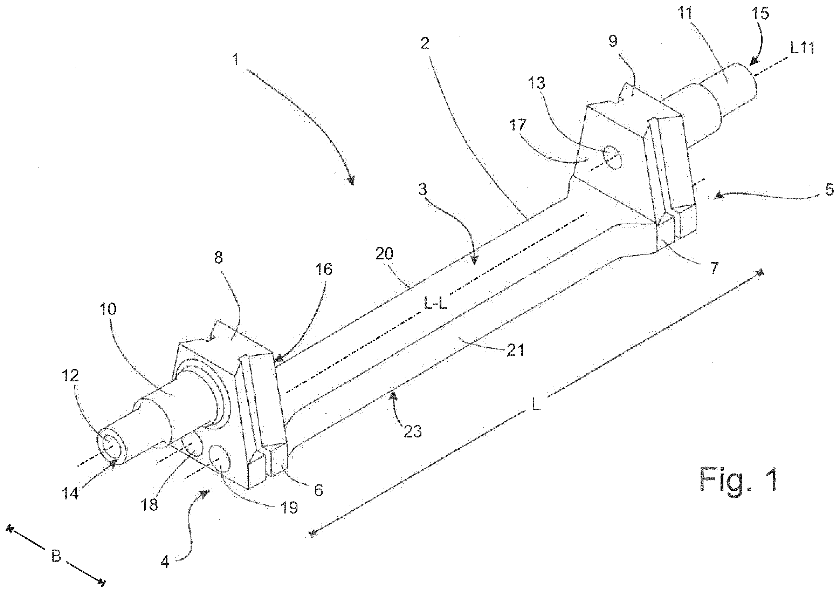

Bei der in den Figuren 1, 2, 4 und 5 gezeigten Ausgestaltungen ist in jeden der Achszapfen 10,11 jeweils eine Längsöffnung 12,13 eingebohrt, die als Durchgangsöffnung mit konstantem Öffnungsquerschnitt von der freien Stirnseite 14,15 des betreffenden Achszapfens 10,11 zu der dem Achsmittelteil 2 zugewandten Seitenfläche 16,17 der den jeweiligen Achszapfen 10,11 tragenden Wange 8,9 führt.

Zusätzlich sind in den Achsmittelteil 2 ausgehend von dessen beispielsweise der Wange 8 zugeordneten Schmalseite 4 zwei Längsöffnungen 18,19 eingebohrt, die sich als Durchgangsbohrungen von der Schmalseite 4 bis zur gegenüberliegenden Schmalseite 5 des Achsmittelteils 2 erstrecken und dabei achsparallel zueinander und zur Längsachse L-L des Achsmittelteils 2 so ausgerichtet sind, dass sie sich im gleichen Abstand zur ihnen jeweils nächstbenachbarten Längsseite 20,21 des Achsmittelteils 2 befinden. Der Durchmesser der Längsöffnungen 18,19 ist dabei so bemessen, dass zwischen der Oberseite 3 und der gegenüberliegenden Unterseite 23 des Achsmittelteils 2 jeweils eine minimale Wandstärke WDmin vorliegt, die dem 0,1- bis 0,25-fachen des Abstands AB zwischen der Oberseite 3 und der Unterseite 23 entspricht (0,1 x AB ≤ WDmin ≤ 0,25 AB). Beispielsweise ist die Wandstärke WD in der Praxis gleich dem 0,125-fachen des Abstands AB zwischen Oberseite 3 und Unterseite 23 (WD = 0,125 x AB).

Nach der in üblicher Weise durchgeführten schmiedetechnischen Erzeugung der Portalachse 1, einer ebenso in bekannter Weise zur Einstellung der mechanischen Eigenschaften durchgeführten Wärmebehandlung, einem ebenfalls konventionell durchgeführten Spannungsarmglühen, dem Einbohren der Längsöffnungen 12,13,18,19 und der mechanischen Endbearbeitung der gesamten Außenkontur der Portalachse außer den Sitzen für Lagerung, Dichtungen und Bremssattelnaben, welche noch abschließend mit Molybdän beschichtet wurden, ist die Portalachse 1 einer Randschichtbehandlung unterzogen worden.

Bei dieser Randschichtbehandlung ist die Portalachse 1 über eine Dauer von 84 h und bei einer Temperatur von 520 °C unter einer Atmosphäre, die aus Ammoniakgas bestand, nitriert worden. Anschließend wurde die Portalachse in konventioneller Weise einem Oxidationsprozess unterworfen.

Nach der Randschichtbehandlung wies die Portalachse 1 im Bereich ihrer Oberflächen einschließlich der Innenflächen der Längsöffnungen 12,13,18,19 eine gegenüber dem Grundwerkstoff von 340 HV erhöhte Vickershärte von 790 HV auf. Die gesamte Dicke der Randschicht betrug ca. 0,7 mm.

Die Oberflächen wurden anschließend verschiedenen Korrosionstests und Beschussversuchen mit Schotter zur Überprüfung der Stoßfestigkeit unterzogen. Im Vergleich zu konventionellen Portalachsen zeigte die randschichtbehandelte Achse sowohl bei Salzsprühtests als auch bei Auslagerung über einen Zeitraum von 3 Monaten unter extremen Bedingungen in säurebelasteter Atmosphäre keinerlei Korrosionsspuren. Die Beschussversuche wurden mit Gleisschotter und mit einer Auftreffgeschwindigkeit bis zu 360 km/h durchgeführt. Die Bauteiloberflächen waren danach weiterhin unversehrt.

Die in Fig. 3 dargestellte alternative Ausgestaltung einer Portalachse setzt auf auf der in den Figuren 1, 2, 4 und 5 dargestellten Portalachse 1. Dabei tragen die Wangen 8' der alternativ gestalteten Portalachse jeweils einen separat vorgefertigten Achszapfen 10', der in an sich bekannter Weise in eine in der jeweiligen Wange 8' vorgesehene Öffnung 22' eingeschrumpft oder in anderer geeigneter Weise fixiert ist. Wie der Achszapfen 10 bei der in Fig. 2 dargestellten Ausgestaltung hat auch der Achszapfen 10' eine Längsöffnung 12', die von der freien Stirnseite 14' bis zur Seitenfläche 16' der Wange 8' führt, die dem Achsmittelteil 2' der Portalachse zugeordnet ist.

Im Gegensatz zu der Längsöffnung 12,13 der Achszapfen 10,11 mit ihrem konstanten Öffnungsdurchmesser weist die Längsöffnung 12' des Achszapfens 10' jedoch ausgehend von der dem Achsmittelteil 2' zugeordneten Seitenfläche 16' der Wange 8' einen ersten Abschnitt 12a' auf, der über einen konisch zulaufenden Absatz in einen zweiten Abschnitt 12b' übergeht, welcher bis zur freien Stirnseite 14a' des Achszapfens 12' führt. Der erste Abschnitt 12a' hat einen größeren Durchmesser als der zweite Abschnitt 12b' und erstreckt sich in dem Bereich des Achszapfens 10', in dem der Achszapfen 10' sein größtes Volumen hat.

Die alternative Ausgestaltung mit dem vorgefertigten, in die Öffnung 22' der Wange 8' eingeschrumpften Achszapfen 8' ist hier der Übersichtlichkeit halber nur für den ersten Endabschnitt 6' der betreffenden Portalachse gezeigt, deren Gestalt und Aufbau im Übrigen der Portalachse 1 entspricht. Selbstverständlich befindet sich am anderen Endabschnitt 7 der Portalachse 1 eine entsprechend ausgebildete Anordnung von Wange und Achszapfen. Auch hier sind dabei die Wangen 8' und die hier nicht gezeigte korrespondierende Wange auf der anderen Seite des Achsmittelteils 2' jeweils durch Schmieden in einem Stück mit dem Achsmittelteil 2' geformt worden.

### BEZUGSZEICHEN

Figuren 1, 2, 4, 5:
- 1: Portalachse
- 2: Achsmittelteil
- 3: Oberseite des Achsmittelteils 2
- 4,5: Schmalseiten des Achsmittelteils 2
- 6,7: Endabschnitte des Achsmittelteils 2
- 8,9: Wangen
- 10,11: Achszapfen
- 12,13: Längsöffnungen der Achszapfen 10,11
- 14,15: freie Stirnseiten der Achszapfen 10,11
- 16,17: Seitenflächen der Wangen 8,9
- 18,19: Längsöffnungen
- 20,21: Längsseiten des Achsmittelteils 2
- 23: Unterseite des Achsmittelteils 2
- B: Breite des Achsmittelteils 2
- L: Länge des Achsmittelteils 2
- L-L: Längsachse des Achsmittelteils 2
- L10,L11: Längsachsen der Achszapfen 10,11

Fig. 3:
- 2': Achsmittelteil
- 6': Endabschnitt des Achsmittelteils 2'
- 8': Wange der alternativ gestalteten Portalachse
- 10': Achszapfen der alternativ gestalteten Portalachse
- 12': Längsöffnung des Achszapfens 10'
- 12a': erster Abschnitt der Längsöffnung 12'
- 12b': zweiter Abschnitt der Längsöffnung 12'
- 14': freie Stirnseite des Achszapfens 10'
- 16': Seitenfläche der Wange 8'
- 22': Öffnung der Wange 8'

## Patentansprüche

1. Portalachse für ein Schienenfahrzeug, mit folgenden Formkomponenten:
- einem sich entlang einer Längsachse (L-L) erstreckenden Achsmittelteil (2),
und
- zwei Achszapfen (10,11,10'), von denen einer an einem ersten Endabschnitt (6) des Achsmittelteils (2) und ein zweiter an einem gegenüberliegend zum ersten Endabschnitt (6) ausgebildeten zweiten Endabschnitt (7) des Achsmittelteils (2) sitzt, wobei die Achszapfen (10,11) nach außen vom Achsmittelteil (2) wegweisend ausgerichtet sind und im Gebrauch eine Drehachse für ein auf dem jeweiligen Achszapfen (10,11) drehbar gelagertes Schienenrad bilden,
- wobei das Achsmittelteil (2) eine im Gebrauch einem Aufbau des Schienenfahrzeugs zugeordnete Oberseite (3) aufweist und wobei die Achszapfen (10,11) auf der Oberseite (3) des Achsmittelteils (2) sitzen, und
- wobei in mindestens eine der Formkomponenten (2,10,11,10') eine sich in Längsrichtung der Portalachse (1) erstreckende Längsöffnung (12,13,18,19,12') eingeformt ist,
**dadurch gekennzeichnet, dass**
in die Formkomponenten (2,10,11,10') jeweils mindestens eine Längsöffnung (12,13,18,19,12') eingeformt ist und dass die Längsöffnung (12,13,18,19,12') als Durchgangsöffnung ausgebildet ist, die durch die jeweilige Formkomponente (2,10,11,10') hindurchführt.

2. Portalachse nach Anspruch 1, **dadurch gekennze ichnet, dass** die Achszapfen (10') jeweils eine als Durchgangsöffnung ausgebildete Längsöffnung (12') aufweisen und **dass** die Längsöffnung (12') einen von ihrer dem Achsmittelteil (2) zugeordneten Mündung ausgehenden, sich in Längsrichtung der Längsöffnung (12') erstreckenden ersten Abschnitt (12a') und einen bis zur freien Stirnseite des Achszapfens reichenden zweiten Abschnitt (12b') aufweist, dessen Durchmesser kleiner ist als der Durchmesser des ersten Abschnitts (12a').

3. Portalachse nach einem der voranstehenden Ansprüche, **dadurch gekennzeichnet, dass** mindestens zwei Längsöffnungen (18,19) in das Achsmittelteil (2) eingeformt sind.

4. Portalachse nach einem der voranstehenden Ansprüche, **dadurch gekennzeichnet, dass** sie mit ihren Formkomponenten (2,8,9,10,11,10') in einem Stück aus einem Stahlwerkstoff hergestellt ist.

5. Portalachse nach Anspruch 4, d a **durch gekennzeichnet, dass** die Längsöffnung (12,13,12') mindestens an ihrer Innenfläche korrosionsschutzbehandelt sind.

6. Portalachse nach Anspruch 4 oder 5, **dadurch gekennzeichnet, dass** sie mindestens im Bereich der Innenfläche der Längsöffnung (12,13,18,19,12') in einer an die jeweilige Innenfläche der Längsöffnung (12,13,18,19,12') grenzenden Randschicht eine Härte aufweist, die in Folge einer chemisch/thermischen Randschichtbehandlung gegenüber der Härte erhöht ist, die die Portalachse (1) in einem außerhalb der Randschicht vorhandenen Kernbereich aufweist.

7. Portalachse nach einem der Ansprüche 4 bis 6, **dadurch gekennzeichnet, dass** mindestens die Innenfläche der Längsöffnung (12,13,18,19,12') mit einer Oxidschicht versehen ist.

8. Verfahren zum Herstellen einer gemäß einem der voranstehenden Ansprüche ausgebildeten Portalachse (1), umfassend folgende Arbeitsschritte:
a) Bereitstellen eines Portalachsen-Rohlings, der die Formkomponenten "Achsmittelteil" und "Achszapfen" umfasst;
b) Einbringen jeweils mindestens einer Längsöffnung in mindestens eine der Formkomponenten (2,10,11,10');
c) optionales Randschichtbehandeln der Portalachse (1) im Bereich einer Innenfläche der Längsöffnung (12,13,18,19,12') und / oder im Bereich einer Außenfläche der Portalachse (1);
d) optionales Oxidieren einer Innenfläche der Längsöffnung (12,13,18,19,12') und / oder einer Außenfläche der Portalachse (1).

9. Verfahren nach Anspruch 8, **dadurch gekennzeichnet, dass** die Portalachse (1) nach dem Einbringen der Längsöffnung (12,13,18,19,12') im Ganzen einer Randschichtbehandlung unterzogen wird.

10. Verfahren nach Anspruch 8 oder 9, **dadurch gekennzeichnet, dass** Arbeitsschritt c) als chemisch/thermisches Randschichtbehandeln durchgeführt wird.

11. Verfahren nach Anspruch 10, d a durch **gekennzeichnet,**
**dass** durch das Randschichtbehandeln der N- und/oder der C-Gehalt mindestens im Bereich der Innenfläche der Längsöffnung (12,13,18,19,12') in einem an die jeweilige Innenfläche der Längsöffnung (12,13,18,19,12') grenzenden Randschicht erhöht wird.

12. Verfahren nach Anspruch 8 bis 11, **dadurch gekennzeichnet, dass** das Bereitstellen des Portalachsen-Rohlings (Arbeitsschritt a)) ein schmiede- und/oder gießtechnisches Formen des Rohlings aus einem Stahlwerkstoff umfasst.

## Claims

1. Portal axle for a rail vehicle, with the following moulded components:
- an axle centre part (2) extending along a longitudinal axis (L-L),
and
- two kingpins (10, 11, 10'), one of which sits on a first end section (6) of the axle centre part (2) and a second on a second end section (7) of the axle centre part (2) formed opposite to the first end section (6), wherein the kingpins (10, 11) are oriented away from the axle centre part (2) and form an axis of rotation in use for a rail wheel rotatably mounted on the respective kingpin (10, 11),
- wherein the axle centre part (2) has an upper side (3) assigned to a body of the rail vehicle in use and wherein the kingpins (10, 11) are positioned on the upper side (3) of the axle centre part (2) and
- wherein a longitudinal opening (12, 13, 18, 19, 12') extending in the longitudinal direction of the portal axle (1) is formed in at least one of the mould components (2, 10, 11, 10'),
**characterized in that**
at least one longitudinal opening (12, 13, 18, 19, 12') is moulded into the mould components (2, 10, 11, 10') and **in that** the longitudinal opening (12, 13, 18, 19, 12') is designed as a through-opening that passes through the respective mould component (2, 10, 11, 10').

2. Portal axle according to claim 1, **characterised in that** the kingpins (10') each have a longitudinal opening (12') formed as a through-opening and **in that** the longitudinal opening (12') has a first section (12a') extending in the longitudinal direction of the longitudinal opening (12') and a second section (12b') extending up to the free end face of the kingpin originating from its outlet assigned to the axle centre part (2), the diameter of which is smaller than the diameter of the first section (12a')

3. Portal axle according to any one of the preceding claims, **characterised in that** at least two longitudinal openings (18, 19) are moulded into the axle centre part (2).

4. Portal axle according to any one of the preceding claims, **characterised in that** it is manufactured from a steel material with its moulded components (2, 8, 9, 10, 11, 10') in one piece.

5. Portal axle according to claim 4, **characterised in that** the longitudinal opening (12, 13, 12') is treated with corrosion protection at least on its inner surface.

6. Portal axle according to either claim 4 or claim 5, **characterised in that** it has a hardness at least in the region of the inner surface of the longitudinal opening (12, 13, 18, 19, 12') in an edge layer adjacent to the respective inner surface of the longitudinal opening (12, 13, 18, 19, 12') which is increased as a result of a chemical/thermal edge layer treatment compared to the hardness that the portal axle (1) has in a core region present outside the edge layer.

7. Portal axle according to any one of claim 4 to claim 6, **characterised in that** at least the inner surface of the longitudinal opening (12, 13, 18, 19, 12') is provided with an oxide layer.

8. A method for producing a portal axle (1) according to any one of the preceding claims, comprising the following work steps:
a) provision of a portal axle blank comprising the "axle centre part" and "kingpin" moulded components;
b) introduction of a longitudinal opening in at least one of the mould components (2, 10, 11, 10');
c) optional edge layer treatment of the portal axle (1) in the region of an inner surface of the longitudinal opening (12, 13, 18, 19, 12') and/or in the region of an outer surface of the portal axle (1);
d) optional oxidation of an inner surface of the longitudinal opening (12,13,18,19,12') and/or an outer surface of the portal axle (1).

9. Method according to claim 8, **characterised in that** the portal axle (1) is subjected to edge layer treatment throughout after the longitudinal opening (12, 13, 18, 19, 12') has been introduced.

10. Method according to either claim 8 or claim 9, **characterised in that** work step c) is carried out as chemical/thermal edge layer treatment.

11. Method according to claim 10, **characterised in that** the edge layer treatment increases the N and/or C content at least in the region of the inner surface of the longitudinal opening (12, 13, 18, 19, 12') in an edge layer adjacent to the respective inner surface of the longitudinal opening (12, 13, 18, 19, 12').

12. Method according to claim 8 to claim 11, **characterised in that** the provision of the portal axle blank (work step a)) comprises forging and/or casting the blank from a steel material.

## Revendications

1. Essieu portique pour un véhicule ferroviaire comprenant les composants moulés suivants :
- une partie centrale d'essieu (2) s'étendant le long d'un axe longitudinal (L-L),
et
- deux broches d'essieu (10, 11, 10'), dont l'une repose sur une première section d'extrémité (6) de la partie centrale d'essieu (2) et dont une seconde repose sur une seconde section d'extrémité (7) de la partie centrale d'essieu (2), formée à l'opposé de la première section d'extrémité (6), les broches d'essieu (10, 11) étant orientées vers l'extérieur à l'opposé de la partie centrale d'essieu (2) et formant, pendant l'utilisation, un axe de rotation pour une roue de rail montée de manière à pouvoir tourner sur chacune des broches d'essieu (10, 11),
- la partie centrale d'essieu (2) présentant une face supérieure (3) associée à une structure du véhicule ferroviaire pendant l'utilisation et les broches d'essieu (10, 11) se trouvant sur la face supérieure (3) de la partie centrale d'essieu (2), et
- une ouverture longitudinale (12, 13, 18, 19, 12') s'étendant dans le sens longitudinal de l'essieu portique (1) étant moulée dans au moins l'un des composants moulés (2, 10, 11, 10'),
**caractérisé en ce que**
au moins une ouverture longitudinale (12, 13, 18, 19, 12') est moulée dans les composants moulés (2, 10, 11, 10') et que l'ouverture longitudinale (12, 13, 18, 19, 12') est conçue en tant qu'ouverture traversante passant à travers le composant moulé (2, 10, 11, 10') respectif.

2. Essieu portique selon la revendication 1, **caractérisé en ce que** les broches d'essieu (10') présentent respectivement une ouverture longitudinale (12') conçue en tant qu'ouverture traversante et **en ce que** l'ouverture longitudinale (12') présente une première section (12a') partant de son embouchure associée à la partie centrale d'essieu (2) et s'étendant dans le sens longitudinal de l'ouverture longitudinale (12') et une seconde section (12b') s'étendant jusqu'à la face frontale libre de la broche d'essieu, dont le diamètre est inférieur au diamètre de la première section (12a').

3. Essieu portique selon l'une des revendications précédentes, **caractérisé en ce qu'**au moins deux ouvertures longitudinales (18, 19) sont moulées dans la partie centrale d'essieu (2).

4. Essieu portique selon l'une des revendications précédentes, **caractérisé en ce qu'**il est réalisé avec ses composants moulés (2, 8, 9, 10, 11, 10') en une seule pièce dans un matériau en acier.

5. Essieu portique selon la revendication 4, **caractérisé en ce que** l'ouverture longitudinale (12, 13, 12') est traitée contre la corrosion au moins sur sa surface intérieure.

6. Essieu portique selon la revendication 4 ou 5, **caractérisé en ce qu'**il présente, au moins dans la zone de la surface intérieure de l'ouverture longitudinale (12, 13, 18, 19, 12') dans une couche superficielle adjacente à la surface intérieure respective de l'ouverture longitudinale (12, 13, 18, 19, 12'), une dureté qui, à la suite d'un traitement chimique/thermique de la couche superficielle, est supérieure à la dureté que présente l'essieu portique (1) dans une zone centrale située à l'extérieur de la couche superficielle.

7. Essieu portique selon l'une des revendications 4 à 6, **caractérisé en ce qu'**au moins la surface intérieure de l'ouverture longitudinale (12, 13, 18, 19, 12') est pourvue d'une couche d'oxyde.

8. Procédé de fabrication d'un essieu portique (1) conçu selon l'une des revendications précédentes, comprenant les étapes de travail suivantes :
a) mise à disposition d'une structure d'essieu portique comprenant les composants moulés « partie centrale d'essieu » et « broches d'essieu » ;
b) réalisation d'au moins une ouverture longitudinale dans au moins un des composants moulés (2, 10, 11, 10') ;
c) au choix, traitement des couches superficielles de l'essieu portique (1) dans la zone d'une surface intérieure de l'ouverture longitudinale (12, 13, 18, 19, 12') et/ou dans la zone d'une surface extérieure de l'essieu portique (1) ;
d) au choix, oxydation d'une surface intérieure de l'ouverture longitudinale (12, 13, 18, 19, 12') et/ou d'une surface extérieure de l'essieu portique (1).

9. Procédé selon la revendication 8, **caractérisé en ce que** l'essieu portique (1) est soumis dans son ensemble à un traitement de couche superficielle après la réalisation de l'ouverture longitudinale (12, 13, 18, 19, 12').

10. Procédé selon la revendication 8 ou 9, **caractérisé en ce que** l'étape de travail c) est réalisée sous forme de traitement chimique/thermique de la couche superficielle.

11. Procédé selon la revendication 10, **caractérisé en ce que** le traitement de la couche superficielle augmente la teneur en N et/ou en C au moins dans la zone de la surface intérieure de l'ouverture longitudinale (12, 13, 18, 19, 12') dans une couche superficielle adjacente à la surface intérieure respective de l'ouverture longitudinale (12, 13, 18, 19, 12').

12. Procédé selon la revendication 8 à 11, **caractérisé en ce que** la mise à disposition de la structure d'essieu portique (étape de travail a)) comprend un formage par forgeage et/ou moulage de la structure à partir d'un matériau en acier.
